Europäisches Patentamt

European Patent Office

Office européen des brevets

(11) Veröffentlichungsnummer: **0 150 032 B1**

# EUROPÄISCHE PATENTSCHRIFT

(45) Veröffentlichungstag der Patentschrift: **13.05.92**

(51) Int. Cl.⁵: **C25C 1/18**

(21) Anmeldenummer: **85100337.6**

(22) Anmeldetag: **15.01.85**

(54) **Verfahren zum Wiedergewinnen von Blei aus Alt-Bleiakkumulatoren-Schrott und Reduktionsplatte hierfür.**

(30) Priorität: **24.01.84 DE 3402338**

(43) Veröffentlichungstag der Anmeldung:
**31.07.85 Patentblatt 85/31**

(45) Bekanntmachung des Hinweises auf die
Patenterteilung:
**13.05.92 Patentblatt 92/20**

(84) Benannte Vertragsstaaten:
**AT BE CH DE FR GB IT LI LU NL SE**

(56) Entgegenhaltungen:
**DE-A- 2 718 462**
**GB-A- 1 368 423**
**US-A- 2 070 513**
**US-A- 4 409 072**

**H. EBERT, Elektrochemie; 2. Auflage, 1979,
Vogel Verlag, Würzburg; Seite 102**

(73) Patentinhaber: **HAGEN Batterie AG
Thomästrasse 27/28
W-4770 Soest(DE)**

(72) Erfinder: **Kiessling, Rainer. Dr.
Am Dorfbach 16
W-4783 Anröchte 4(DE)**
Erfinder: **Plzák, Veetoch
Petersenstrasse 20
W-6100 Darmstadt(DE)**
Erfinder: **Wendt, H. Prof.
Petersenstrasse 20
W-6100 Darmstadt(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

## Beschreibung

Die Erfindung betrifft ein Verfahren zum Wiedergewinnen von Blei aus Alt-Bleiakkumulatoren-Schrott, bei dem die Alt-Bleiakkumulatoren mechanisch zerkleinert werden, Altsäure gesammelt wird, durch Sichtung der Kunststoffbruch von dem Blei-Bleiverbindungsgemenge getrennt wird, gröbere Metallteile vorabgetrennt werden, das in Form einer Pulver-Kornmischung vorliegende Blei-Bleiverbindungsgemenge als poröse Schicht auf eine Kathodenplatte aufgebracht und mit dieser in Schwefelsäure als Elektrolyt und in engem Abstand gegenüber einer Anodenplatte angeordnet wird, und bei dem durch einen Stromfluß von der Kathodenplatte zur Anodenplatte die Bleiverbindungen zu Blei reduziert werden.

Die Wiedergewinnung von Rohstoffen, insbesondere von Blei aus verbrauchten Blei-Schwefelsäure-Akkumulatoren erweist sich zur Einsparung von Blei und zur Herabsetzung der Umweltbelastung durch Bleiverbindungen als sehr wichtig.

Es ist bereits bekannt, Alt-Akkumulatoren durch Zerbrechen und Schweretrennung in Kunststoffbruch, größere Bleiteile (Pole, Anschlußleisten etc.) und ein Blei-Bleiverbindungsgemenge zu zerlegen. Letzteres muß dann durch geeignete Prozesse in Blei umgewandelt werden.

Bekannte pyrometallurgische Prozesse zur Umwandlung des Blei-Bleiverbindungsgemenges in metallisches Blei haben den Nachteil, daß eine erhebliche Staubentwicklung und Schwefeldioxidemission auftreten, was zur Vermeidung erheblicher Umweltverschmutzungen nur in sehr großen Aufbereitungsanlagen mit hohem Aufwand unter Kontrolle gehalten werden kann. Hinzu kommt, daß auch Metallsulfide anfallen, die erhebliche Deponieprobleme aufwerfen.

Zur Herabsetzung der mit der Schwefeldioxidemission und der Emission bleihaltiger Stäube auftretenden Probleme sind auch schon metallurgische Verfahren entwickelt worden. Hier besteht aber ein erhebliches Problem darin, das in Alt-Bleiakkumulatoren in erheblichem Umfang vorliegende grobkristalline Bleisulfat, das sogenannte Hartsulfat, in Blei umzuwandeln. Zum Aufschließen des Hart-Bleisulfats müssen bei allen naß-metallurgischen Verfahren aufwendige mehrstufige Umsetzungen durchgeführt werden. Der Sulfatgehalt wird in Form von durch Blei und Arsen kontaminiertem Ammonium- bzw. Kaliumsulfat wiedergewonnen, das jedoch wegen der Verunreinigungen einer weiteren Verwendung z.B. als Kunstdünger nicht ohne weiteres zugänglich ist.

Zur Vermeidung der mit den pyro- und maßmetallurgischen Verfahren verbundenen Schwierigkeiten ist es auch schon bekanntgeworden (GB-PS 13 68 423), das Blei-Bleiverbindungsgemenge in Form von Bruchstücken, Körnern, Pulver oder einer Paste auf einer Kathodenplatte anzuordnen und in verdünnter Schwefelsäure gegenüber einer Anode anzuordnen. Durch einen Strom von etwa 16 A/kg während etwa 20 Stunden können so 95 % des in dem Schrott-Blei-Bleiverbindungsgemenge enthaltenen Bleis in metallischer Form wiedergewonnen werden, wobei der Stromwirkungsgrad über 60 % liegt.

Bei dem bekannten Verfahren ist jedoch die Stromausbeute noch nicht befriedigend, die Reduktionszeit zu lang und der Aufschluß insbesondere des Hart-Bleisulfats unbefriedigend. Außerdem läßt sich das Blei-Bleiverbindungsgemenge relativ schwer handhaben, weil es als loses Haufwerk auf einer horizontal angeordneten Platte bzw. auf einem horizontal laufenden Kathodenband angeordnet ist.

Das Ziel der Erfindung besteht nun darin, ein mit hoher Wirtschaftlichkeit ausführbares Verfahren der eingangs genannten Gattung zu schaffen, bei dem mit einer möglichst hohen Stromausbeute das in dem Blei-Bleiverbindungsgemenge enthaltene Blei möglichst vollständig in metallischer Form mit nicht zu großem Zeitaufwand und geringem spezifischem Raumbedarf des Reaktors wiedergewonnen wird und bei dem überdies der Sulfatgehalt als möglichst konzentrierte Schwefelsäure, die z.B. als Akkumulatorsäure verwendbar ist, anfällt.

Zur Lösung dieser Aufgabe sieht die Erfindung vor, daß die mit dem Blei-Bleiverbindungsgemenge versehene Kathodenplatte und die Anodenplatte im Verlauf der Elektrolyse kontinuierlich mit Schwefelsäure abnehmender Konzentration in Kontakt gebracht werden.

Als alternative Lösung wird vorgeschlagen, daß die Elektrolyse in zwei Stufen durchgeführt wird bei in der ersten Stufe höheren Schwefelsäurekonzentrationen als in der zweiten Stufe, wobei die Endkonzentration Schwefelsäure in der zweiten Stufe gleich der Anfangskonzentration der Schwefelsäure der ersten Stufe sein kann.

Besonders bevorzugte Konzentrationsbereiche für beide Verfahrensvarianten sind in den Ansprüchen 3 bis 6 angegeben.

Erfindungsgemäß wird vorzugsweise auf eine Verdünnung der Schwefelsäure während der Elektrolyse verzichtet, wodurch die Schwefelsäurekonzentration sowohl bei der Elektrolyse in der ersten als auch in der zweiten Stufe kontinuierlich und stetig zunimmt.

Obwohl das Verfahren grundsätzlich auch im Gegenstrom kontinuierlich durchgeführt werden kann, ist es jedoch bevorzugt, es zweistufig diskontinuierlich durchzuführen.

Sämtliche Konzentrationsangaben verstehen sich als Gewichtsprozente.

Besonders wirtschaftlich kann das erfindungsgemäße Verfahren durchgeführt werden, wenn die Elektrolyse in der zweiten Stufe bis zu einer Konzentration der Schwefelsäure fortgesetzt wird, die der Anfangskonzentration der Schwefelsäure in der ersten Stufe entspricht. Die am Ende der zweiten Reduktionsstufe im Elektrolysebad vorliegende aufkonzentrierte Schwefelsäure kann dann für die Durchführung der ersten Reduktionsstufe eines weiteren Blei-Bleiverbindungsgemenges verwendet werden. Weiter kann in wirtschaftlicher Weise so vorgegangen werden, daß nach dem Abschluß der Elektrolyse bei der höheren Schwefelsäurekonzentration der freie Elektrolyt aus dem Reduktionsgefäß entfernt und durch Wasser, vorzugsweise das gebrauchte Spülwasser, das nach Abschluß der zweiten Stufe anfällt, ersetzt wird.

Die erste Reduktionsstufe kann so durchgeführt werden, daß am Schluß der Reduktion eine z.B. 36 %ige Schwefelsäure als Elektrolysebad vorliegt, die dann ohne weiteres als Akkumulatorsäure für einen neuen Bleiakkumulator verwendet werden kann. Der erfindungsgemäße Prozeß kann also die gesamte für seine Durchführung erforderliche Schwefelsäure selbst bereitstellen und außerdem noch verdünnte Schwefelsäure zur Verwendung in Bleiakkumulatoren erzeugen. Durch Einhängen des mit Schwefelsäure getränkten Gemenges, wie es am Ende der ersten Stufe erzielt wird, in Wasser, kann auf denkbar einfachste Weise die für die zweite Reduktionsstufe erforderliche herabgesetzte Schwefelsäurekonzentration verwirklicht werden.

Eine besonders hohe Ausbeute an metallischem Blei bei relativ geringerem Stromverbrauch wird erzielt, wenn die Elektrolyse in der ersten Stufe bis zum Abschluß der Reduktion des vierwertigen Blei und in der zweiten Stufe bis zum Abschluß der Reduktion des zweiwertigen Blei durchgeführt wird.

Ein weiteres Ziel der Erfindung besteht darin, die Handhabung des Blei-Bleiverbindungsgemenges zu verbessern und gleichzeitig bei hoher Stromausbeute eine weitgehend vollständige Umwandlung der Bleiverbindungen in Blei herbeizuführen.

Zur Lösung dieser weiteren Erfindungsaufgabe sieht die Erfindung bei dem vorstehenden beschriebenen Verfahren vor, daß das Blei-Bleiverbindungsgemenge mit der Kathodenplatte zu einer dünnen, selbsttragenden Reduktionsplatte zusammengepreßt wird.

Aus der US-A-20 70 513 ist zwar bereits eine Vorrichtung zur elektrolytischen Gewinnung von Blei- und Bleioxiden bekannt, bei der die Kathoden bzw. die Anoden als Gitter aus Blei ausgebildet sein können. Die zerkleinerten bzw. zum Teil gepulverten und Blei enthaltenden Teile von Blei-Akkumulatorenschrott werden dann in den Raum zwischen den Anodengitter eingebracht und nach dem Kontaktieren mit dem Elektrolyten schließlich elektrolysiert.

Abgesehen davon, daß bei dieser bekannten Vorrichtung die Kathoden- und Anodenplatten zu räumlich voneinander getrennten Paketen zusammengefaßt sind, während beim gattungsgemäßen Verfahren Kathoden- und Anodenplatten einander gegenüber angeordnet sind, dienen die um Abstand voneinander angeordneten Anodengitter der bekannten Vorrichtung lediglich als ein Behälter für das lose dazwischen eingefüllte gepulverte bzw. zerkleinerte Schrottmaterial. Aus diesem Grunde können Kathoden- und Anodenplatten nicht einander gegenüberliegend angeordnet werden, was zur Erzielung eines hohen Wirkungsgrades erforderlich wäre.

Aufgrund der vorstehend beschriebenen erfindungsgemäßen Ausbildung der Reduktionsplatte als selbsttragendes Element können auf beiden Seiten parallel und im Abstand dazu Anodenplatten vorgesehen werden, so daß ein optimaler Wirkungsgrad bei der Elektrolyse gegeben ist. Auch braucht das Blei-Bleiverbindungsgemenge nicht horizontal liegend, sondern kann trotz der gegenüberliegenden Anodenplatten in jeder beliebigen Anordnung, z.B. auch bei senkrechter Positionierung der Reduktionsplatten gehandhabt werden.

Gegenüber dem aus der GB-PS 13 68 423 bekannten Verfahren wird durch die erfindungsgemäß vorgesehene Pressung zu einer selbsttragenden Platte eine wesentlich verbesserte Leitfähigkeit erzielt, was einer besseren Stromausbeute zugutekommt. So wird über die gesamte Platte ein im wesentlichen gleiches Potential erzielt. Aufgrund der so gebildeten festen Matrix ist insbesondere der Potentialabfall in Richtung der Dicke der Platte minimal. Die Reduktionsfront schreitet gleichmäßig von der dem Elektrolyten zugewandten Oberfläche in das Innere der Platte fort. Außerdem werden die mit der Pressung verbundene Verdichtung des Blei-Bleiverbindungsgemenges die Transportwege für die Ionen erheblich herabgesetzt.

Besonders bevorzugt ist es, wenn die Kathodenplatte durchbrochen ist. Sie kann z.B. die Form eines perforierten Bleches haben. Zweckmäßigerweise ist die Kathodenplatte jedoch als Kathodengitter ausgebildet, wobei das Kathodengitter aus Streckmetall bestehen kann. Aufgrund dieser Ausbildung kann sich das Blei-Bleiverbindungsgemenge auch in den Durchbrechungen bzw. Gitteröffnungen befinden, wo es zum einen gut mechanisch verankert wird, zum anderen aber auch sehr nahe dem auf festem Potential liegenden Material der Kathodenplatte ist.

Das Kathodengitter kann aus Streckmetall, insbesondere aus Bleistreckmetall oder aber aus Stahl, Titan oder Kupfer bestehen.

Die Wirtschaftlichkeit des erfindungsgemäßen Verfahrens bei Verwendung einer durchbrochenen Kathodenplatte wird weiter dadurch gesteigert, daß das gepreßte Blei-Bleiverbindungsgemenge sich von beiden Seiten der Kathodenplatte wegerstreckt und beispielsweise sich von einer Seite der Kathodenplatte um nicht mehr als 2 cm, insbesondere 1,5 cm und vorzugsweise 1 cm wegerstreckt. Die Dicke des gepreßten Blei-Bleiverbindungsgemenges soll auf einer Seite der Kathodenplatte vorzugsweise 2 bis 8 und insbesondere 3 bis 5 mm betragen.

Die Größe der Durchbrechungen bzw. Gitteröffnungen der Kathodenplatte soll kleiner als 2 cm, insbesondere kleiner als 1,5 cm und vorzugsweise kleiner als etwa 1 cm sein und beispielsweise zwischen 2 und 10 mm, insbesondere zwischen 4 und 8 mm liegen.

Auf diese Weise beträgt der größte Abstand irgendwelcher Bereiche innerhalb des Blei-Bleiverbindungsgemenges von Teilen der Kathodenplatte auf jeden Fall deutlich weniger als 1 cm, was für ein gleichmäßiges Potential an allen Stellen des Gemenges von erheblicher Bedeutung ist.

Zur Herstellung des gepreßten Blei-Bleiverbindungsgemenges ist es zweckmäßig, wenn dieses vor dem Pressen mit Wasser homogenisiert wird. Der Wassergehalt kann dabei vorzugsweise 2 bis 20 Gew.-% und insbesondere 6 bis 10 Gew.-% betragen, während der Preßdruck vorzugsweise 100 bis 600 und insbesondere 200 bis 500 kp/cm² betragen soll.

Der elektrischen Leitfähigkeit der gepreßten Reduktionsplatte kommt erfindungsgemäß besondere Bedeutung zu. Sofern die Leitfähigkeit des in dem Blei-Bleiverbindungsgemenge enthaltenen Bleis und Bleidioxids noch nicht voll ausreicht, wird nach einer bevorzugten Ausführungsform das Blei-Bleiverbindungsgemenge vor dem Pressen mit feinverteiltem Blei (feinzerteiltes Bleigitter) vermischt, welches ebenfalls aus der Schrottaufbereitung stammt, so daß weder von dem gewonnenen metallischen Blei noch von außen zusätzliches Blei für den Prozeß erforderlich ist.

Im allgemeinen wird das reduzierte Blei in einem Blei-Schmelzbad ausgeschmolzen. Im letzteren Fall bildet sich insbesondere auf der Oberfläche des Schmelzbades eine Schlackeschicht, die einen hohen Anteil an metallischem Blei hat. Bei dieser Ausführungsform ist es besonders wirtschaftlich, wenn die sich in bzw. auf dem Bleischmelzbad bildende Schlacke dem zu reduzierenden Blei-Bleiverbindungsgemenge zugemischt wird. Die Leitfähigkeit wird hier also durch Zugabe eines Abfallproduktes erreicht, wobei dann in vorteilhafter Weise auch die in dem Blei-Bleiverbindungsgemenge fein verteilte Schlacke weitgehend vollständig zu metallischem Blei aufgeschlossen wird.

Die erfindungsgemäß verwendete Kathodenplatte kann zweckmäßig aus Stahl, Bleistreckmetall, Titan oder Kupfer bestehen.

Ein Stahl-Gitter ist besonders stabil und wirtschaftlich herstellbar. Es neigt jedoch zur Korrosion und Wasserstoffentwicklung.

Die Verwendung von Bleistreckmetall hat zur Folge, daß sich beim Ausschmelzen in dem Bleischmelzbad nicht nur das reduzierte Blei-Bleiverbindungsgemenge, sondern auch die Kathodenplatte selbst vollständig auflöst.

Titan als Träger für das Gemenge hat den Vorteil, daß es sich nicht mit Blei legiert und beliebig wiederverwendbar ist.

Besonders vorteilhaft ist ein Kupferträger, wobei das Kupfer bevorzugt in Form eines Kupferstreckmetalls vorliegt. Durch den vorhandenen Bleiüberzug ist das Kupfer gegen Korrosion geschützt. Es ist wesentlich billiger als Titan.

Von großer Bedeutung ist die durch den Preßvorgang genau definierte Porosität der erfindungsgemäßen Reduktionsplatte. Besonders bevorzugt beträgt die Porosität des Blei-Bleiverbindungsgemenges 50 bis 70 % und insbesondere etwa 60 %. Hierbei handelt es sich um die Anfangsporosität der Reduktionsplatte. Während des erfindungsgemäßen Prozesses steigt die Porosität stetig an, indem die Oxide und das Sulfat reduziert werden. In den Hohlräumen findet bevorzugt die Bleiabscheidung in feinster kristalliner Form statt, wodurch eine ganz erhebliche Verzahnung der sich bildenden Metallkristalle erfolgt. Hierdurch werden immer neue Gebiete der Reduktionsplatte elektrisch an die bereits auf dem gewünschten Potential liegenden Bereiche der Platte angeschlossen, sofern noch solche kleinen isolierten Gebiete in der Reduktionsplatte vorliegen sollten. Die Reduktion findet in erster Linie auf der Oberfläche der bereits in der Reduktionsplatte vorhandenen Bleiteile und Bleikristalle statt. Von dort wächst der Bleischwamm. Während des Reduktionsvorganges wachsen also kontinuierlich sowohl die Leitfähigkeit, als auch die Porosität als auch die reaktive Oberfläche, was für die Vollständigkeit der Metallgewinnung und die gute Stromausbeute von besonderer Bedeutung ist. Voraussetzung ist aber auf jeden Fall, daß die Reduktionsplatte nicht zu dick und die Gitterabstände nicht zu groß sind, damit alle Teile der Reduktionsplatte möglichst vollständig und widerstandsfrei an das gewünschte Kathodenpotential angeschlossen sind.

Wichtig für ein wirtschaftliches Arbeiten ist auch die in beiden Reduktionsstufen angewandte Stromdichte. Es ist bevorzugt, daß die Stromdichte bei der Elektrolyse mit der höheren Schwefelsäurekonzentration 10 bis 30 A/kg, insbesondere 15 bis 25 A/kg und vorzugsweise 20 A/kg beträgt und beispielsweise die Anfangsstromdichte bei der Elektrolyse mit der niedrigeren Schwefelsäurekonzentration 20 bis 40 A/kg, insbesondere 25 bis 35 A/kg und vorzugsweise etwa 30 A/kg beträgt, wobei ggfs. die Stromstärke beim Beginn des Auftretens des Gases herabgesetzt wird, und zwar vorzugsweise kontinuierlich und bis auf etwa 1/10 des Anfangswertes.

Die bevorzugten Stromdichten von 20 bis 30 A/kg gewährleisten eine gute Raum/Zeitausbeute, wobei die durch den Lösungsprozeß des Bleisulfats und die Diffusionsgeschwindigkeiten bedingten zeitlichen Gegebenheiten optimal berücksichtigt sind.

Ein weiterer wesentlicher Parameter des erfindungsgemäßen Verfahrens ist die Reaktionstemperatur. Bevorzugt beträgt die Temperatur des Blei-Bleiverbindungsgemenges und des Elektrolysebades bei der Elektrolyse mehr als 25° C und liegt beispielsweise zwischen 40 und 80° C und insbesondere bei etwa 60 C.

Nach dem Reduzieren in der zweiten Stufe werden die Reduktionsplatten in Wasser gespült, um die darin noch enthaltene Schwefelsäure zu entfernen.

Das gebrauchte Spülwasser kann in wirtschaftlicher Weise als Elektrolyt für den Beginn der zweiten Reduktionsstufe verwendet werden.

Die Behälter, in denen das erfindungsgemäße Verfahren durchgeführt wird, bestehen beispielsweise aus Holz oder aus mit säurefestem Kunststoff ausgekleidetem Stahl. Die Behälter sollen oben abbedeckt sein, um nach außen dringende Spritzer zu vermeiden.

Beim erfindungsgemäßen Verfahren muß also außer dem Blei-Akkumulator-Schrott nur Wasser zugeführt werden,während Blei und in günstiger Konzentration vorliegende Schwefelsäure gewonnen werden. Irgendwelche umweltschädigenden Nebenprodukte entstehen nicht.

Das gesamte Verfahren läuft also einschließlich der mechanischen Vorbereitung in vier Phasen ab.

Die erste besteht in der mechanischen Vorbereitung durch Zerbrechen und Schreddern der Alt-Bleiakkumulatoren, dem Sammeln der Altsäure, einer nachfolgenden mechanischen Sichtung (bzw. Schweretrennung) des Gemenges aus Blei, Bleisulfat und Bleidioxid vom Kunststoffbruch.

In dieser ersten Phase werden auch größere noch vorhandene Bleiteile wie Anschlußklemmen, Elektroden, Anschlußleisten usw. abgetrennt.

In der zweiten Phase erfolgt dann die Herstellung der gepreßten Reduktionsplatten aus dem Blei-Bleiverbindungsgemenge, wobei zuvor grobe metallische Teile mit Abmessungen von mehr als 2 mm abgetrennt wurden. Nach dem Versetzen dieser Rohmischung mit den Kleingitterteilen und der Schlacke werden dann die Reduktionsplatten mit der Kathodenplatte in der für das folgende kathodische Reduktionsverfahren optimalen Dicke und Porosität gepreßt.

Die dritte Phase besteht dann in der zweistufigen Reduktion der so hergestellten porösen Reduktionsplatten. Die beschriebene Prozeßführung der kathodischen Reduktion gestattet die Reduktion der in den Rohelektroden enthaltenen Bleiverbindungen bis zu einem Reduktionsgrad von mehr als 98 % mit integralen Stromausbeuten von besser als 70 %.

Erfindungsgemäß können als Anoden entweder $Pb$-$PbO_2$-Anoden oder aktivierte Titananoden benutzt werden. Beide Varianten garantieren die Vermeidung der Kontamination das Prozesses durch Fremdelemente.

In der dritten Phase wird zunächst überwiegend das Bleidioxid in höher konzentrierter Schwefelsäure mit einer relativ hohen Stromausbeute in Bleisulfat überführt. Anschließend erfolgt dann die weitere Reduktion des in erster Linie noch verbleibenden Bleisulfats mit ebenfalls sehr günstiger Stromausbeute bei niedrigerer Schwefelsäurekonzentration.

Die Prozeßtemperatur von vorzugsweise 60 bis 80°C begünstigt die Auflösung und kathodische Umsetzung des Bleisulfats. Hierdurch sowie durch die Anwendung des erfindungsgemäßen Verfahrens kann die Passivierung der Bleidioxid-Komponenten in den porösen Elektroden sicher vermieden werden. Gleichzeitig wird durch Erzeugung eines dendritischen Blei-Niederschlages in den Poren der porösen Kathoden die gleichmäßige elektronische Leitfähigkeit der Elektroden und deren gleichmäßige Reduktion über ihre gesamte Tiefe sichergestellt. Die erfindungsgemäßen Prozeßbedingungen ermöglichen einen sicheren Betrieb der Elektrolyse bei stetig eingestellten Stromdichten von 15 bis 30 A/kg, ohne daß die integrale Stromausbeute unter etwa 70 % sinkt. Die Herstellung von porösen Roh-Reduktionsplatten von vorgegebener Porosität, Dicke und elektrischer Leitfähigkeit ermöglicht eine weitgehend automatisierte, den körperlichen Kontakt der Arbeitskräfte mit den bleihaltigen Substanzen vermeidende Arbeitsweise, in der außerdem durch stets feucht gehaltene Arbeitsstoffe und Arbeitsmittel ein unerwünschtes Verstauben der bleihaltigen Prozeßstoffe sicher vermieden wird.

Weiter ist es für die Erfindung wichtig, die mit der Kathodenplatte ausgestattete Reduktionsplatte in unmittelbarem Kontakt mit einen porösen Separator aus Kunststoff oder Papier anzuordnen und darauffolgend in unmittelbarer Anlage die Anode vorzusehen, so daß eine möglichst große Anzahl von erfindungsgemäßen Reduktionsplatten in einem den Elektrolyten enthaltenden Behälter untergebracht werden kann. Dies bedingt auch möglichst geringe Zellenspannungen und große Raum/Zeit-Ausbeuten für die Durchführung der Reduktion.

Die dichte Anordnung von Reduktionsplatten, Separatoren und Anoden ermöglicht auch die mechanische Unterstützung und Halterung der porösen Kathoden bzw. Reduktionsplatten durch die kompakten Anoden, die ja aus massivem Metall hergestellt sind. Insofern braucht das für die Reduktionsplatte verwendete Kathodengitter auch nicht übermäßig stabil ausgebildet zu sein. Man kann so beispielsweise auch ein Bleigitter bei der Herstellung der Reduktionsplatten verwenden, wodurch der abschließende Einschmelzprozeß wesentlich vereinfacht wird.

Die Gitter der porösen Reduktionsplatten können aber auch aus anderen Metallen hoher mechanischer Festigkeit sowie hinreichender Korrosionsstabilität, wie z.B. Eisen, Edelstahl, Nickel, Kupfer, Titan hergestellt werden.

Beim erfindungsgemäßen Verfahren wird entweder durch diskontinuierliche oder durch kontinuierliche Zufuhr der bilanzmäßig ermittelten Menge an Frischwasser in der zweiten Reduktionsstufe sowie durch entsprechende volumetrisch überwachte Überführung der Prozeß-Schwefelsäure aus der zweiten in die erste Prozeßstufe und Ausschleusung der Prozeßsäure aus der ersten bzw. zweiten Prozeßstufe sehr reine Schwefelsäure der Konzentration 36,4 % (erste Stufe) bzw. 12 % (zweite Stufe) gewonnen, die aufgrund der Vorreinigung der Schreddermasse der Spezifizierung von Akkumulatorsäure genügt und daher in die Batterieproduktion zurückgeführt werden kann.

Das erfindungsgemäße Verfahren erlaubt damit die vollständige Rückgewinnung und Wiederverwendung der Schwefelsäure, die im Bleisulfat des Akkumulatorschrotts gespeichert ist, dessen Anteil bei vollständig entladenen Batterien maximal ist. Lediglich für die unreine Altsäure aus den Alt-Bleiakkumulatoren ist noch eine chemische Neutralisierung unter Erzeugung von z.B. Gips oder Ammonsulfat erforderlich. Die vierte Phase besteht schließlich in dem Ausschmelzen des Bleimetalls in einem Bleischmelzkessel aus der vollständig reduzierten Reduktionsplatte. Im Bereich des Bleischmelzkessels ist der reduzierte Bleischwamm in der Reduktionsplatte durch ein Schutzgas z.B. durch die reduzierend wirkenden Heizgase für den Bleischmelzkessel vor Oxidation zu schützen.

Die wesentlichen Vorteile des erfindungsgemäßen Verfahrens sind wie folgt:
Die Emission von Schwefeldioxid sowie von bleihaltigen Dämpfen und Stäuben wird vollständig vermieden.

Die im Bleisulfat gespeicherte Schwefelsäure wird vollständig zurückgewonnen in einer Qualität, die eine Weiterverwendung als Akkumulatorsäure zuläßt.

Die einzelnen Verfahrensschritte ermöglichen ein hohes Maß an Automation und gewähren somit optimale Bedingungen, um eine gesundheitliche Gefährdung der Arbeitskräfte durch Kontakt mit Blei und Bleiverbindungen zu vermeiden.

Durch geeignete Auslegung des Verfahrens wird ein geringer Bedienungsaufwand bei relativ geringen Investitionskosten erzielt.

Das erfindungsgemäße Verfahren eignet sich auch zur Konstruktion von Anlagen zur Aufbereitung von Bleiakkumulator-Schrott mit kleiner Kapazität ( ab etwa 0,5 t/d) und eignet sich damit gut für die dezentrale Aufbereitung von Bleiakkumulatorschrott, z.B. auch in Entwicklungsländern.

Erfindungsgemäß wird ein erheblicher Teil der Stromwärme zur Aufkonzentration der Schwefelsäure ohne zusätzliche Verdampfungsstufe verwendet. Die entwickelte Stromwärme wird somit sinnvoll genutzt.

Erfindungsgemäß werden nur rund 10 % des verarbeiteten Bleis im Prozeß im Kreis geführt, und zwar durch Wiederbeimischung von Schlacke zu dem zu pressenden Blei-Bleiverbindungsgemenge.

Die Erfindung wird im folgenden beispielsweise anhand der Zeichnung beschrieben; in dieser zeigt:

Fig. 1    einen schematischen Querschnitt einer Anordnung zur diskontinuierlichen Durchführung des erfindungsgemäßen Verfahrens, wobei das Plattenpaket zur Vermeidung einer Überladung der Zeichnung unterbrochen wiedergegeben ist,

Fig. 2    eine Ansicht nach Linie II-II in Fig. 1 und

Fig. 3    eine schematische Veranschaulichung einer Anordnung zur Durchführung des erfindungsgemäßen Verfahrens im Gegenstrom.

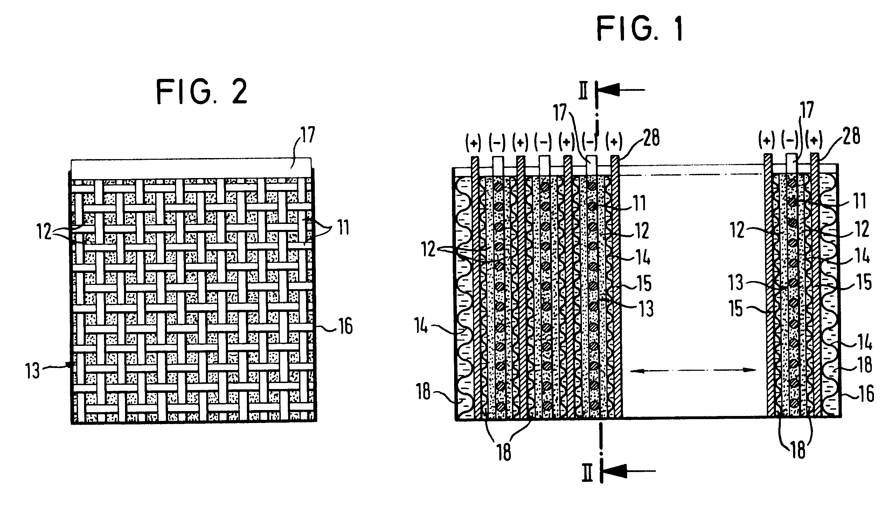

Nach Fig. 1,2 besteht die erfindungsgemäße Anordnung abwechselnd aus Reduktionsplatten 13, Separatoren 14 und oben eine Anschlußleiste 28 zum Anlegen eines positiven Potentials aufweisenden Anodenplatten 15, welche eng aufeinandergepackt sind und als Paket in einem Behälter 16 untergebracht sind und diesen ausfüllen. Außerdem befindet sich in dem Behälter 16 als Elektrolyt verdünnte Schwefelsäure 18, die den die Separatoren 14 enthaltenden Raum ausfüllt.

Jede Reduktionsplatte 13 besteht aus einem Metallgitter 11, um das von beiden Seiten her ein pulver-kornförmiges Blei-Bleiverbindungsgemenge 12 herumgepreßt ist. Oben befindet sich an dem Metallgitter 11 eine Anschlußleiste 17, die an ein negatives Potential angelegt werden kann. Das gepreßte Blei-Bleiverbindungsgemenge 12 ist begrenzt porös und damit saugfähig. Es ist mit der verdünnten Schwefelsäure 18 getränkt.

Bevorzugt ist das gesamte Paket aus den Platten 13,14,15 als Einheit handhabbar und in den Behälter 16 hinein- bzw. aus ihm herausbringbar.

In einem speziellen Beispiel erfolgt die Reduktion der aus Akkumulatorbleischrott gebildeten Reduktionsplatte 13 wie folgt:
Zunächst wird das Plattenpaket 13,14,15 in den Behälter 16 mit einer 27 %igen Schwefelsäure eingebracht, deren Temperatur 60°C beträgt.

Durch Anschließen der Anschlußleisten 17 der Kathoden-Reduktionsplatte 13 bzw. 28 der Anodenplatte 15 an eine nicht dargestellte Stromquelle wird ein Strom mit einer Stromdichte von 20 A/kg durch die Reduktionsplatten 13 hindurchgeführt. Dieser Verfahrensschritt wird bis zum Verbrauch von 70 % der vorausberechneten Strommenge durchgeführt.

Anschließend wird dann das Plattenpaket aus dem Behälter 16 herausgenommen und zur Durchführung der zweiten Reduktionsstufe in einen Behälter mit einer Schwefelsäurekonzentration von rund 10 % angeordnet. Die Anfangsstromdichte beträgt in diesem Fall 30 A/kg. Die Reduktion in dieser zweiten Stufe wird bis zum Verbrauch von rund 110 bis 120 % der theoretischen Strommenge durchgeführt, wobei eine langsam zunehmende Wasserstoffentwicklung beobachtet wird. Zur Verbesserung der Stromausbeute wird dann bei Einsetzen des Gasens die Stromdichte stufenweise bis auf einen Endwert von 3 A/kg gesenkt. Nach Erreichen des 1,35-fachen des theoretischen Stromverbrauches werden die Reduktionsplatten mit Wasser ausgespült. Auf diese Weise kann ein vollständiger Umsatz bereits nach weniger als dem 1,4-fachen des theoretischen Stromverbrauchs erzielt werden, was einer integralen Stromausbeute von etwa 70 % entspricht.

Der erzeugte Bleischwamm wird anschließend bevorzugt in einer Bleischmelze unter Schutzgas ausgeschmolzen.

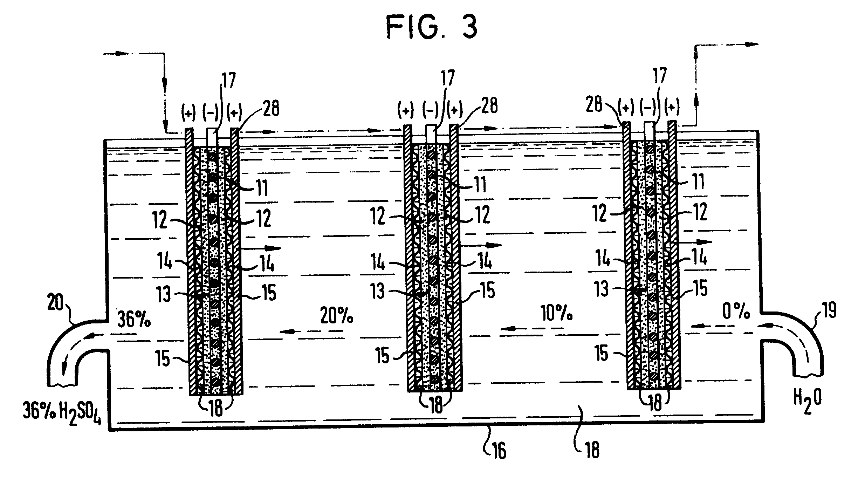

Fig. 3 veranschaulicht in rein schematischer Weise, wie das erfindungsgemäße Verfahren kontinuierlich im Gegenstrom durchgeführt werden kann. In einen Behälter 16, der wesentlich länger, als es in Fig. 3 dargestellt ist, zu gestalten ist, werden vom einen Ende her im Sinne der strichpunktierten Linie einzelne Pakete aus Platten 11,12,13 am z.B. linken Ende des Behälters 16 in die dort konzentrierte, z.B. 36 %ige Schwefelsäure eingehängt und dann kontinuierlich in Richtung der ausgezogen gezeichneten Pfeile in Richtung des anderen Behälterendes verschoben, wobei an den Anschlußleisten 17,28 die zur Erzielung der erforderlichen Stromdichte erforderliche Spannung anliegt. Am rechten Ende des Behälters befindet sich ein Anschlußstutzen 19 zum Einführen von Wasser, während am linken Ende ein Abflußstutzen 20 zum Abführen von 36 %iger Schwefelsäure vorgesehen ist. Während sich also die Plattenpakete 11,12,13 kontinuierlich von links nach rechts bewegen, wird das Wasser bzw. die in ihrer Konzentration kontinuierlich zunehmende Schwefelsäure von rechts nach links entsprechend den gestrichelt gezeichneten Pfeilen gefördert. Aufgrund der Reduktion der erfindungsgemäßen Reduktionsplatte 12 wird die Konzentration der Schwefelsäure von rechts nach links kontinuierlich größer und steigert sich z.B. von 0 % über 10 % und 20 % auf 36 %, was in Fig. 3 schematisch angegeben ist.

Da die Schwefelsäurekonzentration ganz am Schluß des Prozesses 0 % beträgt, kann von der höchsten Konzentration bis zum Spülvorgang das gesamte Verfahren in einem einzigen Arbeitsgang durchgeführt werden. Voraussetzung ist lediglich, daß der Behälter 16 lang genug ist und durch geeignete Maßnahmen ein kontinuierlicher Konzentrationsabfall von einem Ende bis zum anderen Ende des Behälters 16 vorliegt. Hierbei muß die Diffusionsgeschwindigkeit bzw. die Strömungsgeschwindigkeit der Säure innerhalb der Plattenpakete ebenso beachtet werden wie die Transportgeschwindigkeit der Plattenpakete und die Strömungsgeschwindigkeit des Elektrolyten 18 in dem Behälter 16.

**Patentansprüche**

1. Verfahren zum Wiedergewinnen von Blei aus Alt-Bleiakkumulatoren-Schrott, bei dem die Alt-Bleiakkumulatoren mechanisch zerkleinert werden, Altsäure gesammelt wird, durch Sichtung der Kunststoffbruch von dem Blei-Bleiverbindungsgemenge getrennt wird, gröbere Metallteile vorabgetrennt werden, das in Form einer Pulver-Kornmischung vorliegende Blei-Bleiverbindungsgemenge als poröse Schicht auf eine Kathodenplatte aufgebracht und mit dieser in Schwefelsäure als Elektrolyt und in engem Abstand gegenüber einer Anodenplatte angeordnet wird, und bei dem durch einen Stromfluß von der Kathodenplatte zur Anodenplatte die Bleiverbindungen zu Blei reduziert werden, dadurch **gekennzeichnet**, daß die mit dem Blei-Bleiverbindungsgemenge versehene Kathodenplatte und die Anodenplatte im Verlauf der Elektrolyse kontinuierlich mit Schwefelsäure abnehmender Konzentration in Kontakt gebracht werden.

2. Verfahren zum Wiedergewinnen von Blei aus Alt-Bleiakkumulatoren-Schrott, bei dem die Alt-Bleiakkumulatoren mechanisch zerkleinert werden, Altsäure gesammelt wird, durch Sichtung der Kunststoffbruch von dem Blei-Bleiverbindungsgemenge getrennt wird, gröbere Metallteile vorabgetrennt werden, das in Form einer Pulver-Kornmischung vorliegende Blei-Bleiverbindungsgemenge als poröse Schicht auf eine Kathodenplatte aufgebracht und mit dieser in Schwefelsäure als Elektrolyt und in engem Abstand gegenüber einer Anodenplatte angeordnet wird, und bei dem durch einen Stromfluß von der Kathodenplatte zur Anodenplatte die Bleiverbindungen zu Blei reduziert werden, dadurch **gekennzeichnet,** daß die Elektrolyse in zwei Stufen durchgeführt wird bei in der ersten Stufe höheren Schwefelsäurekonzentrationen als in der zweiten Stufe, wobei die Endkonzentration der Schwefelsäure in der zweiten Stufe gleich der Anfangskonzentration der Schwefelsäure der ersten Stufe sein kann.

3. Verfahren nach Anspruch 1, dadurch **gekennzeichnet,** daß die Konzentration im Verlauf der Elektrolyse von Werten zwischen 25 und 40 % auf Werte zwischen 8 und weniger als 25 % abnimmt.

4. Verfahren nach Anspruch 3, dadurch **gekennzeichnet,** daß die Konzentration auf Werte zwischen 10 und 20 % abnimmt.

5. Verfahren nach Anspruch 2, dadurch **gekennzeichnet,** daß die Elektrolyse in der ersten Stufe mit einer Konzentration der Schwefelsäure von wenigstens 20 % begonnen und dann bis zu einer Konzentration der Schwefelsäure von wenigstens 25 % weitergeführt wird, worauf die Elektrolyse in der zweiten Stufe bei einer Konzentration der Schwefelsäure von wenigstens 8 % begonnen und dann bis zu einer Konzentration der Schwefelsäure von wenigstens 20 % fortgesetzt wird.

6. Verfahren nach Anspruch 2, dadurch **gekennzeichnet,** daß die Elektrolyse in der ersten Stufe mit einer Konzentration der Schwefelsäure von wenigstens 25 % begonnen und dann bis zu einer Konzentration der Schwefelsäure von wenigstens 30 % weitergeführt wird, worauf die Elektrolyse in der zweiten Stufe bei einer Konzentration der Schwefelsäure von wenigstens 10 % begonnen und dann bis zu einer Konzentration der Schwefelsäure von 25 % fortgesetzt wird.

7. Verfahren nach einem der Ansprüche 2 bis 6, dadurch **gekennzeichnet,** daß die Elektrolyse in der ersten Stufe bis zum Abschluß der Reduktion des vierwertigen Blei und in der zweiten Stufe bis zum Abschluß der Reduktion des zweiwertigen Blei durchgeführt wird.

8. Verfahren nach einem der Ansprüche 2 bis 7, dadurch **gekennzeichnet,** daß nach dem Abschluß der Elektrolyse in der ersten Stufe der freie Elektrolyt aus dem Reaktionsgefäß entfernt und durch Wasser ersetzt wird.

9. Verfahren nach Anspruch 8, dadurch **gekennzeichnet,** daß es sich bei dem Wasser um das gebrauchte Spülwasser handelt, das nach Abschluß der zweiten Stufe entfällt.

10. Verfahren nach einem der vorhergehenden Ansprüche, dadurch **gekennzeichnet,** daß das Blei-Bleiverbindungsgemenge (12) mit der Kathodenplatte (11) zu einer dünnen, selbsttragenden Reduktionsplatte (13) zusammengepreßt wird.

11. Verfahren nach Anspruch 10, dadurch **gekennzeichnet,** daß das gepreßte Blei-Bleiverbindungsgemenge (12) sich von beiden Seiten der Kathodenplatte (11) wegerstreckt.

12. Verfahren nach Anspruch 10 oder 11, dadurch **gekennzeichnet,** daß das Blei-Bleiverbindungsgemenge (12) vor dem Pressen mit Wasser homogenisiert wird.

13. Verfahren nach einem der vorhergehenden Ansprüche, dadurch **gekennzeichnet,** daß das reduzierte Blei in einem Bleischmelzbad ausgeschmolzen wird.

14. Verfahren nach einem der vorhergehenden Ansprüche, dadurch **gekennzeichnet,** daß die Stromdichte bei der Elektrolyse mit der ersten Schwefelsäurekonzentration 10 bis 30 A/kg und die Anfangsstromdichte bei der Elektrolyse mit der zweiten Schwefelsäurekonzentration 20 bis 40 A/kg beträgt.

15. Verwendung einer Platte, bei der sich auf einer Kathodenplatte ein gepreßtes Blei-Bleiverbindungsgemenge auf beiden Seiten des Gitters sowie in dessen Zwischenräumen befindet und so eine selbsttragende Platte geschaffen wird, als Reduktionsplatte für ein Verfahren nach einem der vorhergehenden Ansprüche.

## Claims

1. A process of recovering lead from old lead accumulator scrap wherein the old lead accumulators are mechanically comminuted, wherein old acid is collected, wherein the broken plastic is separated by sifting from the mixture of lead and lead compounds, wherein coarser metal parts are initially separated, wherein the mixture of lead and lead compounds present as a powder/grain mixture is applied as a porous layer to a cathode plate and arranged with the latter in sulphuric acid as electrolyte at a small spacing from an anode plate, and wherein the lead compounds are reduced to lead by a flow of current from the cathode plate to the anode plate, characterized in that during the electrolysis, the cathode plate having the mixture of lead and lead compounds and the anode plate are brought in contact continually with sulphuric acid of decreasing concentration.

2. A process of recovering lead from old lead accumulator scrap wherein the old lead accumulators are mechanically comminuted, wherein old acid is collected, wherein the broken plastic is separated by sifting from the mixture of lead and lead compounds, wherein coarser metal parts are initially separated, wherein the mixture of lead and lead compounds present as a powder/grain mixture is applied as a porous layer to a cathode plate and arranged with the latter in sulphuric acid as electrolyte at a small spacing from an anode plate, and wherein the lead compounds are reduced to lead by a flow of current from the cathode plate to the anode plate, characterized in that the electrolysis is carried out in two stages, wherein the concentration of the sulphuric acid in the first stage is higher than in the second stage, and the final concentration of the sulphuric acid in the second stage can be equal to the initial concentration of the sulphuric acid in the first stage.

3. A process in accordance with claim 1, characterized in that during the course of the electrolysis the concentration decreases from values between 25 and 40 % to values between 8 and less than 25 %.

4. A process in accordance with claim 3 or claim 2, characterized in that the concentration decreases to values between 10 and 20 %.

5. A process in accordance with claim 2, characterized in that the electrolysis is started in the first stage with a concentration of the sulphuric acid of at least 20 %, and is then continued up to a concentration of the sulphuric acid of at least 25 %, whereupon the electrolysis is started in the second stage at a concentration of the sulphuric acid of at least 8 % and continued thereafter up to a concentration of the sulphuric acid of at least 20 %.

6. A process in accordance with claim 2, characterized in that the electrolysis is started in the first stage with a concentration of the sulphuric acid of at least 25 % and is then continued up to a concentration of the sulphuric acid of at least 30 %, whereupon the electrolysis is started in the second stage at a concentration of the sulphuric acid of at least 10 % and continued thereafter up to a concentration of the sulphuric acid of at least 25 %.

7. A process in accordance with claims 2 to 6, characterized in that the electrolysis in the first stage is carried out until the conclusion of the reduction of the tetravalent lead and in the second stage until the conclusion of the reduction of the divalent lead.

8. A process in accordance with one of the claims 2 to 7, characterized in that at the end of the electrolysis in the first stage the free electrolyte is removed from the reaction vessel and is replaced by water.

9. A process in accordance with claim 8, characterized in that the water used is flushing water which arises at the end of the second stage.

10. A process in accordance with any one of the preceding claims, characterized in that the mixture of lead and lead compounds (12) is pressed together with the cathode plate (11) to a thin self-supporting reduction plate (13).

11. A process in accordance with claim 10, characterized in that the pressed mixture (12) of lead and lead compounds extends away from both sides of the cathode plate (11).

12. A process in accordance with one claim 10 or 11, characterized in that the mixture (12) of lead and lead compounds is homogenised with water prior to the pressing.

13. A process in accordance with one of the preceding claims, characterized in that the reduced lead is melted out in a lead fusion bath.

14. A process in accordance with one of the preceding claims, characterized in that the current density during the electrolysis at the first sulphuric acid concentration amounts to from 10 to 30 A/kg, and in that the initial current density during the electrolysis at the second sulphuric acid concentration amounts to from 20 to 40 A/kg.

15. Use of a plate in which a pressed mixture of lead and lead compounds is placed on both sides of the grid and into its intermediate spaces and a self-supporting plate is thereby achieved, as a reduction plate for a process in accordance with one of the preceding claims.

## Revendications

1. Procédé de récupération de plomb à partir de déchets d'accumulateurs au plomb, dans lequel on broie les accumulateurs au plomb en petits morceaux, on rassemble les vieux acides, on sépare par soufflage les morceaux de matière plastique du mélange de plomb et de composés de plomb, on sépare préalablement les morceaux grossiers de métal, on applique le mélange de plomb et composés de plomb présent comme mélange de poudre et de grains sous la forme d'une couche poreuse sur une plaque d'électrode et on place ce mélange avec la plaque de cathode dans de l'acide sulfurique en tant qu'électrolyte et à courte distance d'une plaque d'anode, et dans lequel on réduit les composés de plomb en plomb au moyen d'un courant s'écoulant depuis la plaque d'électrode vers la plaque d'anode, caractérisé en ce que la plaque de cathode portant le mélange de plomb et composés de plomb et la plaque d'anode sont mises au cours de l'électrolyse continuellement en contact avec de l'acide sulfurique de concentration décroissante.

2. Procédé de récupération de plomb à partir de déchets d'accumulateurs au plomb, dans lequel on broie les accumulateurs au plomb en petits morceaux, on rassemble les vieux acides, on sépare par soufflage les morceaux de matière plastique du mélange de plomb et de composés de plomb, on sépare préalablement les morceaux grossiers de métal, on applique le mélange de plomb et composés de plomb présent comme mélange de poudre et de grains sous la forme d'une couche poreuse sur une plaque d'électrode et on agence ce mélange avec la plaque de cathode dans de l'acide sulfurique en tant qu'électrolyte et à courte distance d'une plaque d'anode, et dans lequel on réduit les composés de plomb en plomb au moyen d'un courant s'écoulant depuis la plaque d'électrode vers la plaque d'anode, caractérisé en ce que l'on conduit l'électrolyse en deux étapes, dans lesquelles les concentrations en acide sulfurique sont plus fortes au cours de la première étape qu'au cours de la seconde étape, la concentration finale en acide sulfurique de la seconde étape pouvant être égale à la concentration de départ en acide sulfurique de la première étape.

3. Procédé selon la revendication 1, caractérisé en ce que la concentration décroît au cours de l'électrolyse depuis des valeurs comprises entre 25 et 40 % jusqu'à des valeurs comprises entre 8 et moins de 25 %.

4. Procédé selon la revendication 3, caractérisé en ce que la concentration décroît jusqu'à des valeurs comprises entre 10 et 20 %.

5. Procédé selon la revendication 2, caractérisé en ce que l'électrolyse débute au cours de la première étape à une concentration en acide sulfurique d'au moins 20 % et se poursuit jusqu'à une concentration en acide sulfurique d'au moins 25 %, suite à quoi l'électrolyse débute au cours de la seconde étape à une concentration en acide sulfurique d'au moins 8 % et se poursuit jusqu'à une concentration en acide sulfurique d'au moins 20 %.

6. Procédé selon la revendication 2, caractérisé en ce que l'électrolyse débute au cours de la première étape à une concentration en acide sulfurique d'au moins 25 % et se poursuit jusqu'à une concentration en acide sulfurique d'au moins 30 %, suite à quoi l'électrolyse débute au cours de la seconde étape à une concentration en acide sulfurique d'au moins 10 % et se poursuit jusqu'à une concentration en acide sulfurique d'au moins 25 %.

7. Procédé selon l'une quelconque des revendications 2 à 6, caractérisé en ce que l'électrolyse est menée au cours de la première étape jusqu'à réduction complète du plomb tétravalent et au cours de la seconde étape jusqu'à réduction complète du plomb bivalent.

8. Procédé selon l'une quelconque des revendications 2 à 7, caractérisé en ce que, après terminaison de l'électrolyse de la première étape, on enlève l'électrolyte libre de la cuve de réaction et on le remplace par de l'eau.

9. Procédé selon la revendication 8, caractérisé en ce que ladite eau est l'eau de rinçage qui s'échappe après la fin de la seconde étape,

10. Procédé selon l'une quelconque des revendications précédentes, caractérisé en ce que le mélange de plomb et composés de plomb (12) est comprimé avec la plaque de cathode (11) en une plaque de réduction (13) fine et autoportante.

11. Procédé selon la revendication 10, caractérisé en ce que le mélange comprimé de plomb et composés de plomb (12) s'étend au-delà des deux côtés de la plaque de cathode (11).

12. Procédé selon l'une des revendications 10 ou 11, caractérisé en ce que le mélange de plomb et composés de plomb (12) est homogénéisé à l'eau avant pressage.

13. Procédé selon l'une quelconque des revendications précédentes, caractérisé en ce que le plomb réduit est fondu dans un bain de fusion de plomb.

14. Procédé selon l'une quelconque des revendications précédentes, caractérisé en ce que la densité de courant au cours de l'électrolyse avec la première concentration en acide sulfurique est de 10 à 30 A/kg, et la densité initiale de courant de l'électrolyse avec la seconde concentration en acide sulfurique est de 20 à 40 A/kg.

15. Utilisation d'une plaque, dans laquelle un mélange comprimé de plomb et composés de plomb se touve sur les deux côtés de la grille ainsi que dans ses espaces intermédiaires et une plaque autoporteuse est ainsi obtenue, en tant que plaque de réduction pour un procédé selon l'une quelconque des revendications précédentes.

# FIG. 1

# FIG. 2

EP 0 150 032 B1

# FIG. 3

EP 0 150 032 B1